# EUROPÄISCHE PATENTANMELDUNG

(11) **EP 1 801 459 A1**
(43) Veröffentlichungstag der Anmeldung: **27.06.2007**
(21) Anmeldenummer: 06025901.7
(22) Anmeldetag: 14.12.2006
(51) Int. Cl.: F16H 41/26, F16H 41/28, F16H 45/02

(54) **Schaufel und Schaufelbaugruppe für den Stator eines Drehmomentwandlers, Stator mit Schaufeln für einen Drehmomentwandler, und Verfahren zu deren Herstellung**

(30) Priorität: 20.12.2005 US 752192 P
(71) Anmelder: LuK Lamellen und Kupplungsbau Beteiligungs KG, 77815 Bühl (DE)
(72) Erfinder: George, Philip, Wooster OH 44691 (US); Olsen, Steven, Wooster OH 44691 (US); Gurney, Nigel, Wooster OH 44691 (US)

(57) **Zusammenfassung**

Schaufel (10) für den Stator eines Drehmomentwandlers, wobei die Schaufel einen Körper (12), ein erstes Ende (14) und ein zweites Ende (16) beinhaltet; eine Statorschaufelbaugruppe (100); und einen Stator (200) für einen Drehmomentwandler, der eine Vielzahl von Schaufeln (10), ein Gehäuse (204) und einen Laufring (206) beinhaltet. Das erste Ende (14) ist so angeordnet, dass es mit dem Gehäuse (204) verbunden ist, und das zweite Ende (14) ist so angeordnet, dass es mit dem Laufring (206) verbunden ist. Gemäß einigen Aspekten ist die Schaufel (10) gestanzt oder der Körper bogenförmig. Die Baugruppe (100) beinhaltet eine Vielzahl einzelner Schaufeln (10). Gemäß einigen Aspekten ist jede Schaufel (10) gestanzt oder überlappen sich Körper benachbarter Schaufeln zumindest teilweise in Bezug auf eine durch eine Achse des Stators (200) führende radiale Ebene. Gemäß einigen Aspekten erweitert sich eine axiale Öffnung zwischen den Schaufeln in radialer Richtung nach außen oder nach innen.

## Beschreibung

### GEBIET DER ERFINDUNG

Die Erfindung betrifft Verbesserungen an einer Vorrichtung zur Kraftübertragung zwischen einer rotatorischen Antriebseinheit (zum Beispiel dem Motor eines Kraftfahrzeugs) und einer rotatorisch angetriebenen Einheit (zum Beispiel dem Automatikgetriebe in dem Kraftfahrzeug). Insbesondere betrifft die Erfindung eine gestanzte Statorschaufel für einen Drehmomentwandler. Die Erfindung betrifft auch einen Stator für einen Drehmomentwandler mit einer Anordnung einzelner Schaufeln, insbesondere gestanzter Schaufeln.

### HINTERGRUND DER ERFINDUNG

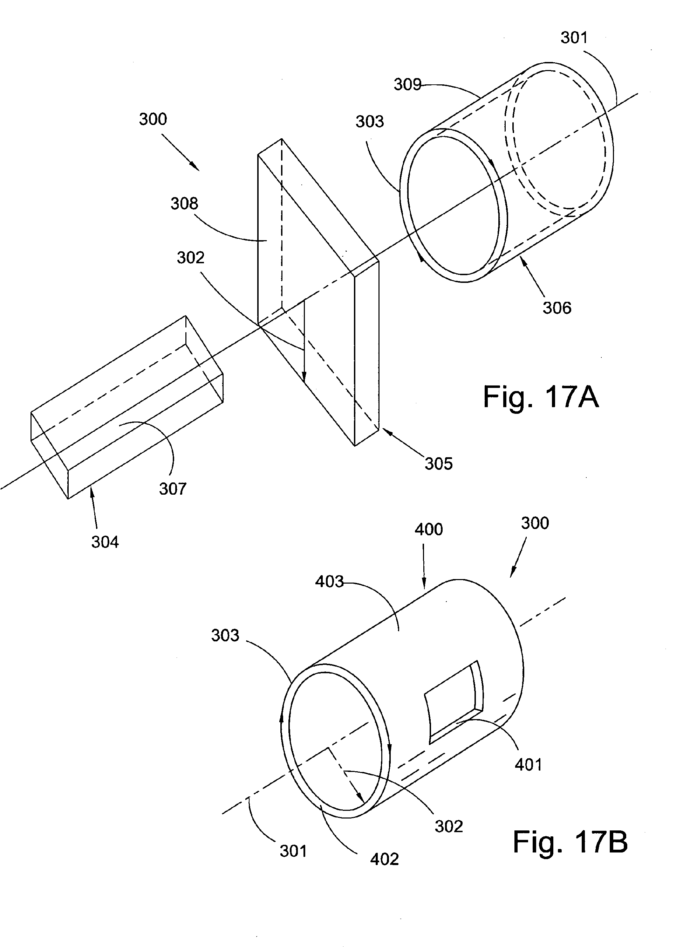

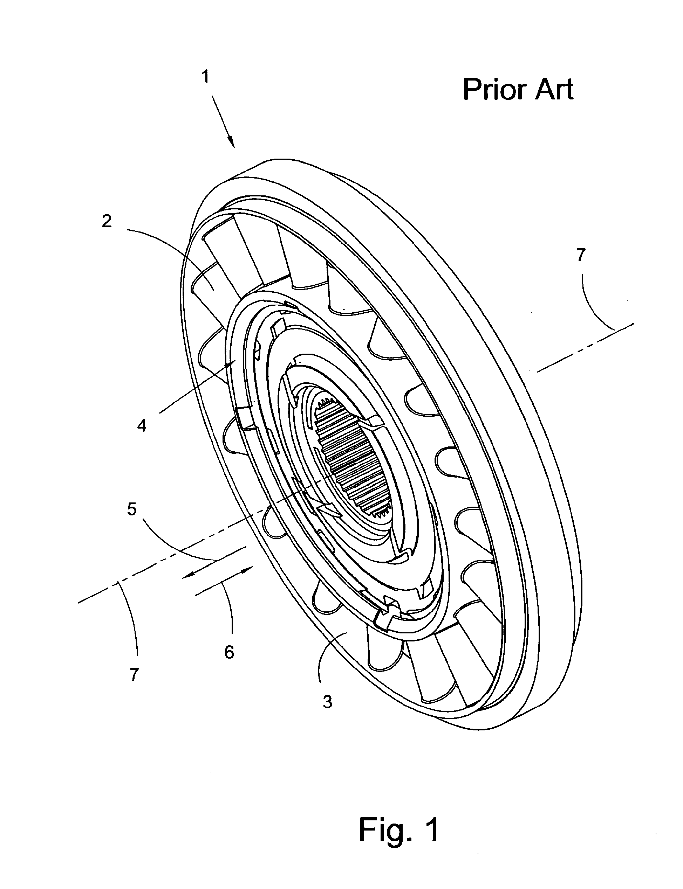

Fig. 1 ist eine perspektivische Ansicht eines Stators 1 nach dem Stand der Technik für einen Drehmomentwandler. Bekannt ist, dass ein Stator für einen Drehmomentwandler durch Metallguss, z.B. durch Aluminiumguss, oder durch Formguss mit Materialien wie Phenolharz hergestellt wird. Insbesondere werden diese Verfahren zur Herstellung von Schaufeln 2 für einen Stator in einer Einheit angewendet. Typischerweise werden die Statorschaufeln 2, der Laufring 3 und Teile des Statorkörpers 4 in einer Einheit oder einem Stück gebildet. Das Gießverfahren ist leider sehr kostspielig. Gegossene Statoren erfordern üblicherweise eine zusätzliche spanabhebende Bearbeitung, um andere Komponenten, zum Beispiel eine Einwegekupplung, Seitenplatten oder einen Sprengring aufzunehmen. Üblicherweise werden Statoren mit Gussformen gefertigt, die radial oder axial getrennt werden. Aus Kostengründen wird die axiale Anordnung stärker bevorzugt. Zum Beispiel kann bei Statoren nach dem radialen Gießverfahren der Außenring nicht in die Gussform einbezogen werden. Deshalb muss um den Stator herum ein separater Laufring, typischerweise aus Stahl, angebracht und mit diesem verschweißt werden.

Durch verschiedene Anordnungen der Schaufeln in einem Stator kann ein verbesserter hydrodynamischer Wirkungsgrad erreicht werden. Zum Beispiel beeinflusst die Form der Statorschaufeln den Wirkungsgrad der Flüssigkeitsübertragung durch den Stator von der Turbine zur Pumpe. In vielen Fällen müssen die Schaufeln den Flüssigkeitsstrom stark umlenken. Der Eintrittswinkel der Schaufeln stellt ein Maß für die Ausrichtung der Schaufelnase (an dem der Turbine zugewandten Ende des Stators) dar. Der Wirkungsgrad der Flüssigkeitsübertragung im Stator ist eine Funktion der Ausrichtung des Eintrittswinkels auf die Richtung des von der Turbine kommenden Flüssigkeitsstroms. Das heißt, je genauer die Ausrichtung ist, desto höher ist der Wirkungsgrad. Leider schränkt die Verwendung von Gussformen die möglichen Anordnungen der durch die Gussform gebildeten Schaufeln ein. Insbesondere müssen die Schaufeln und andere in der Gussform gebildeten Komponenten so geformt und ausgerichtet werden, dass die Oberflächenmerkmale der Gussform an allen Punkten ein ungehindertes Entnehmen ' ermöglichen. Beim axialen Trennen zum Beispiel wird die Gussform in den axialen Richtungen 5 und 6 getrennt. Deshalb dürfen sich die Schaufeln und Komponenten nicht hinterschneiden oder überlappen, weil dadurch das Abnehmen der Gussform in den Richtungen 5 und 6 behindert würde. Zum Beispiel können sich die Schaufeln in Umfangsrichtung nicht überlappen. Das heißt, eine durch die Achse 7 führende (nicht gezeigte) axiale Ebene kann benachbarte Schaufeln nicht schneiden. Um den oben erwähnten Eintrittswinkel für Anwendungen optimal zu gestalten, die ein höheres Drehmomentverhältnis erfordern, muss die Schaufelnase stärker gekrümmt sein als der übrige Schaufelkörper. Solche Krümmungsradien führen jedoch zu Überlappungen, die für eine axial zu trennende Gussform nicht akzeptiert werden können. Deshalb muss die Schaufelnase für eine axial zu trennende Gussform zur Verhinderung axialer Überlappungen nachteilig "abgeflacht" werden, was den für die Schaufeln möglichen Eintrittswinkel in unerwünschter Weise begrenzt. Aufgrund der dem Gießverfahren innewohnenden Einschränkungen müssen gegossene Schaufeln mit einer Mindestdicke hergestellt werden. Leider verringert diese Mindestdicke mitunter den Wirkungsgrad des Stators.

Somit besteht seit langem ein Bedarf an einem Stator mit Schaufeln, die zur Verbesserung des hydrodynamischen Wirkungsgrades angeordnet sind. Ferner besteht seit langem ein Bedarf an einem Stator, der unter Verwendung von Verfahren, die einfacher und kostengünstiger sind, und von Materialien hergestellt werden kann, die billiger als die üblicherweise bei Gieß- und Formgussverfahren verwendet werden.

### KURZZUSAMMENFASSUNG DER ERFINDUNG

Die vorliegende Erfindung umfasst im Allgemeinen eine Schaufel für den Stator eines Drehmomentwandlers, wobei die Schaufel einen Körper, ein erstes Ende und ein zweites Ende beinhaltet. Das erste Ende ist so angeordnet, dass es mit einem Gehäuse oder Körper des Stators verbunden ist, und das zweite Ende ist so angeordnet, dass es mit einem Laufring des Stators verbunden ist. Gemäß einigen Aspekten ist die Schaufel gestanzt bzw. das erste und das zweite Ende sind integraler Bestandteil des Körpers. Gemäß einigen Aspekten beinhaltet das erste Ende ein erstes Segment und mindestens ein zweites Segment, wobei das erste Segment unter einem ersten Winkel in Bezug auf den Körper und das mindestens eine zweite Segment unter einem zweiten Winkel in Bezug auf das erste Segment angeordnet ist. Gemäß einigen Aspekten ist der Körper bogenförmig gestaltet oder weist eine gleichmäßige Dicke auf. Gemäß einigen Aspekten beinhaltet das zweite Ende mindestens ein drittes Segment, das unter einem dritten Winkel in Bezug auf den Körper angeordnet ist, wobei das mindestens eine dritte Segment eine Zunge beinhaltet, die unter einem vierten Winkel in Bezug auf das mindestens dritte Segment angeordnet ist. Gemäß einigen Aspekten verjüngt sich der Körper in Bezug auf das erste und zweite Ende, insbesondere vom ersten zum zweiten Ende.

Im Allgemeinen umfasst die vorliegende Erfindung auch eine Anordnung von Statorschaufeln für den Stator eines Drehmomentwandlers mit einer Vielzahl einzelner Schaufeln. Jede Schaufel stellt ein separates Teil dar und weist einen Körper, ein erstes Ende und ein zweites Ende auf. Das erste Ende ist so angeordnet, dass es mit einem Gehäuse des Stators verbunden ist, und das zweite Ende ist so angeordnet, dass es mit einem Laufring des Stators verbunden ist. Gemäß einigen Aspekten ist jede Schaufel gestanzt. Gemäß einigen Aspekten überlappen die Körper für benachbarte Schaufeln zumindest teilweise eine durch eine Statorachse führende axiale Ebene. Gemäß einigen Aspekten ist zwischen der ersten und zweiten Schaufel eine axiale Öffnung gebildet, und die erste Öffnung wird in radialer Richtung nach außen oder nach innen größer. Gemäß einigen Aspekten sind gegenüberliegende Flächen benachbarter Schaufeln im Wesentlichen parallel.

Ferner umfasst die vorliegende Erfindung im Allgemeinen einen Stator mit einer Vielzahl von Schaufeln, einem Statorgehäuse und einem Laufring für einen Drehmomentwandler. Jede Schaufel stellt ein separates Teil dar und beinhaltet ein erste Ende, das mit dem Statorgehäuse verbunden ist, und ein zweites Ende, das mit dem Laufring verbunden ist. Gemäß einigen Aspekten sind die Schaufeln gestanzt. Der Außenring beinhaltet eine radiale Innenfläche, und das zweite Ende beinhaltet eine radiale Außenfläche der Schaufel, die in Kontakt mit der radialen Innenfläche steht. Gemäß einigen Aspekten ist die radiale Außenfläche der Schaufel so angeordnet, dass sie den Statorring verstärkt. Gemäß einigen Aspekten beinhaltet der Laufring mindestens eine Öffnung und eine radiale Außenfläche, beinhaltet das mindestens eine zweite Ende eine Zunge, ragt die Zunge durch eine entsprechende Öffnung und ist die Zunge so abgewinkelt, dass sie mit der radialen Außenfläche verbunden ist. Gemäß einigen Aspekten ist der Laufring eine gestanzte rechteckige Platte mit einem ersten und einem zweiten Ende, die einander überlappen und miteinander verbunden sind. Gemäß einigen Aspekten beinhaltet der Laufring eine äußere Umfangsfläche und eine erste und eine zweite axiale Fläche, wobei das erste Ende mit der äußeren Umfangsfläche und der ersten und zweiten axialen Fläche verbunden ist. Gemäß einigen Aspekten beinhaltet der Stator eine erste und eine zweite Seitenplatte, die mit einer Presspassung auf mindestens einen Teil des ersten Endes und der ersten und zweiten axialen Fläche aufgezogen sind. Gemäß einigen Aspekten sind die erste und die zweite Seitenplatte gestanzt. Gemäß einigen Aspekten beinhaltet der Außenring eine Einwegekupplung und einen Kugellagerring für die Kupplung, wobei die erste und die zweite Platte die Vielzahl gestanzter Schaufeln und die Kupplung haltern und der Kugellagerring durch die erste und die zweite Platte zentriert wird.

Ferner umfasst die vorliegende Erfindung auch entsprechende Verfahren zur Bildung einer Schaufel für den Stator eines Drehmomentwandlers und zur Bildung einer Anordnung von Statorschaufeln für den Stator eines Drehmomentwandlers.

Eine allgemeine Aufgabe der vorliegenden Erfindung besteht darin, eine Schaufel für einen Stator bereitzustellen, die kostengünstiger hergestellt werden kann, insbesondere eine Schaufel, die durch ein Stanzverfahren hergestellt werden kann.

Eine weitere allgemeine Aufgabe der vorliegenden Erfindung besteht darin, eine Schaufelbaugruppe für den Stator eines Drehmomentwandlers bereitzustellen, die Schaufelanordnungen wie Überlappungen, Hinterschneidungen, Abstände zwischen Schaufeln und Eintrittwinkel beinhaltet, die bei Verwendung von Gieß- oder Formgussverfahren nicht möglich sind.

Diese und andere Aufgaben und Vorteile der vorliegenden Erfindung werden aus der folgenden Beschreibung bevorzugter Ausführungsarten der Erfindung und aus den beiliegenden Zeichnungen und Ansprüchen klar.

### KURZBESCHREIBUNG DER ZEICHNUNGEN

In der folgenden detaillierten Beschreibung werden das Wesen und die Funktionsweise der vorliegenden Erfindung in Verbindung mit den beiliegenden Figuren ausführlich beschrieben, wobei:
Fig. 1 eine perspektivische Ansicht eines Stators nach dem Stand der Technik für einen Drehmomentwandler ist;
Fig. 2 eine perspektivische Vorderansicht einer Statorschaufel gemäß der vorliegenden Erfindung ist;
Fig. 3 und 4 perspektivische Rückansichten der in Fig. 2 gezeigten Statorschaufel sind;
Fig. 5 eine Ansicht der in Fig. 2 gezeigten Statorschaufel von unten ist;
Fig. 6 eine Draufsicht auf die in Fig. 2 gezeigte Statorschaufel ist;
Fig. 7 eine perspektivische Ansicht einer teilweise dargestellten Statorschaufelbaugruppe ist;
Fig. 8 bis 10 Vorderansichten benachbarter Statorschaufeln einer Statorschaufelbaugruppe gemäß der vorliegenden Erfindung sind, welche entsprechende Überlappungen der Schaufeln veranschaulichen;
Fig. 11 eine Draufsicht auf benachbarte Statorschaufeln einer Statorschaufelbaugruppe gemäß der vorliegenden Erfindung ist, welche die Schaufelwinkel veranschaulicht;
Fig. 12 eine perspektivische Vorderansicht eines Stators gemäß der vorliegenden Erfindung für einen Drehmomentwandler ist;
Fig. 13 eine Rückansicht des in Fig. 12 gezeigten Stators ist;
Fig. 14 eine Querschnittsansicht des in Fig. 12 gezeigten Stators entlang der Schnittlinie 14-14 in Fig. 13 ist;
Fig. 15 eine Vorderansicht des in Fig. 12 gezeigten Außenrings ist;
Fig. 16 eine Querschnittsansicht des in Fig. 15 gezeigten Außenrings entlang der Schnittlinie 16-16 in Fig. 15 ist;
Fig. 17A eine perspektivische Ansicht eines Zylinderkoordinatensystems ist, welche die in der vorliegenden Patentanmeldung gebrauchten räumlichen Begriffe veranschaulicht; und
Fig. 17B eine perspektivische Ansicht eines Objekts im Zylinderkoordinatensystem von Fig. 17A ist, welche die in der vorliegenden Patentanmeldung gebrauchten räumlichen Begriffe veranschaulicht.

### DETAILLIERTE BESCHREIBUNG DER ERFINDUNG

Von vornherein sollte klar sein, dass gleiche Bezugsnummern in verschiedenen Zeichnungsansichten identische oder funktionell ähnliche Strukturelemente der Erfindung bezeichnen. Obwohl die vorliegende Erfindung in Bezug auf die als bevorzugt angesehenen Aspekte beschrieben wird, sollte klar sein, dass die beanspruchte Erfindung nicht auf die beschriebenen Aspekte beschränkt ist.

Außerdem sollte klar sein, dass die vorliegende Erfindung nicht auf bestimmte beschriebene Verfahren, Materialien und Änderungen beschränkt ist und insofern natürlich variieren kann. Ferner sollte klar sein, dass die hier gebrauchten Begriffe nur zur Beschreibung bestimmter Aspekte dienen und nicht als Einschränkung des Geltungsbereichs der vorliegenden Erfindung zu verstehen sind, der nur durch die angehängten Ansprüche eingeschränkt wird.

Wenn nicht anders erwähnt, haben alle hier verwendeten technischen und wissenschaftlichen Begriffe dieselbe Bedeutung, wie sie einem Fachmann geläufig ist, an den sich diese Erfindung richtet. Obwohl zum Ausführen oder Testen der Erfindung beliebige Verfahren, Vorrichtungen oder Materialien verwendet werden können, die den hier beschriebenen ähnlich oder gleichwertig sind, werden im Folgenden die bevorzugten Verfahren, Vorrichtungen und Materialien beschrieben.

Fig. 17A ist eine perspektivische Ansicht eines Zylinderkoordinatensystems 300, das die in der vorliegende Erfindung gebrauchten räumlichen Begriffe veranschaulicht. Die vorliegende Erfindung wird zumindest teilweise in Verbindung mit einem Zylinderkoordinatensystem beschrieben. Das System 300 weist eine Längsachse 301 auf, die als Bezugsbasis für die folgenden Richtungsangaben und räumlichen Begriffe dient. Die Eigenschaften "axial", "radial" und "Umfangs-" beziehen sich auf eine Ausrichtung parallel zur Achse 301, zum Radius 302 (der zur Achse 301 rechtwinklig ist) bzw. zum Umfang 303. Die Eigenschaften "axial", "radial" und "Umfangs-" beziehen sich auch auf eine Ausrichtung parallel zu entsprechenden Flächen. Zur Erläuterung der Lage der verschiedenen Ebenen dienen die Objekte 304, 305 und 306. Die Fläche 307 des Objekts 304 bildet eine axiale Ebene. Das heißt, die Achse 301 bildet eine Linie entlang der Fläche. Die Fläche 308 des Objekts 305 bildet eine radiale Ebene. Das heißt, der Radius 302 bildet eine Linie entlang der Fläche. Die Fläche 309 des Objekts 306 bildet eine Umfangsfläche. Das heißt, der Umfang 303 bildet eine Linie entlang der Fläche. Ein weiteres Beispiel besagt, dass eine axiale Bewegung oder Lage parallel zur Achse 301 ist, eine radiale Bewegung oder Lage parallel zum Radius 302 ist und eine auf den Umfang bezogene Bewegung oder Lage parallel zum Umfang 303 ist. Die Rotation bezieht sich auf die Achse 301.

Die Eigenschaften "axial", "radial" und "Umfangs-" beziehen sich auf eine Ausrichtung parallel zur Achse 301, zum Radius 302 bzw. zum Umfang 303. Die Eigenschaften "axial", "radial" und "Umfangs-" beziehen sich auch auf die Ausrichtung parallel zu entsprechenden Flächen.

Fig. 17B ist eine perspektivische Ansicht eines Objekts 400 im Zylinderkoordinatensystem 300 von Fig. 17A, welche die in der vorliegenden Patentanmeldung gebrauchten Begriffe veranschaulicht. Das zylindrische Objekt 400 stellt ein zylindrisches Objekt in einem Zylinderkoordinatensystem dar und ist in keiner Weise als Einschränkung der vorliegenden Erfindung zu verstehen. Das Objekt 400 beinhaltet eine axiale Fläche 401, eine radiale Fläche 402 und eine Umfangsfläche 403. Die Fläche 401 ist Teil einer axialen Ebene, die Fläche 402 ist Teil einer radialen Ebene, und die Fläche 403 ist Teil einer Umfangsfläche.

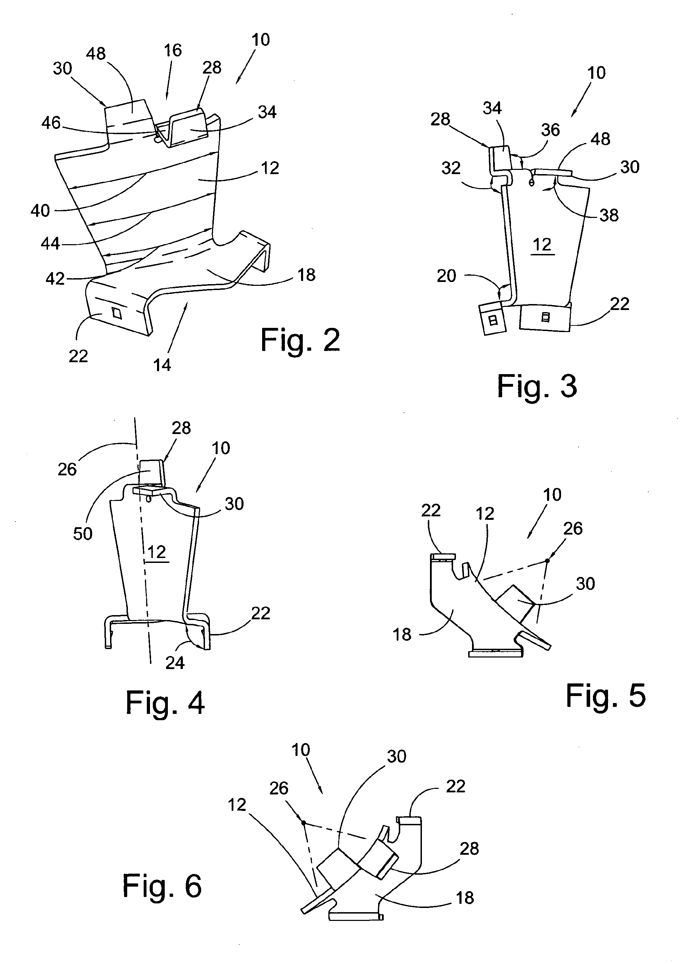

Fig. 2 ist eine perspektivische Vorderansicht einer Statorschaufel 10 der vorliegenden Erfindung. Die Schaufel 10 ist eine Schaufel für den (nicht gezeigten) Stator eines Drehmomentwandlers und beinhaltet einen Körper 12 mit den Enden 14 und 16. Das Ende 14 ist so angeordnet, geformt oder gestaltet, dass es mit einem Statorgehäuse verbunden ist. Das Ende 16 ist so angeordnete, geformt oder gestaltet, dass es mit einem Laufring des Stators verbunden ist. Die Enden 14 und 16 sind integraler Bestandteil des Körpers 12. Gemäß einigen Aspekten können ein oder beide Enden vom Körper getrennt sein und durch ein beliebiges in der Technik bekanntes Mittel am Körper befestigt sein. Die Enden 14 und 16 werden auch als Gehäuseverbindungssegment bzw. als Laufringverbindungssegment bezeichnet.

Fig. 3 und 4 sind perspektivische Rückansichten der in Fig. 2 gezeigten Statorschaufel 10.

Fig. 5 ist eine Ansicht der in Fig. 2 gezeigten Statorschaufel 10 von unten.

Fig. 6 ist eine Draufsicht auf die in Fig. 2 gezeigte Statorschaufel 10. Die folgende Beschreibung ist in Verbindung mit den Figuren 1 bis 6 zu sehen. Zur Verbindung mit dem Statorgehäuse beinhaltet das Ende 14 ein Segment 18, das unter einem Winkel 20 in Bezug auf den Körper angeordnet oder gebildet ist. Der Winkel 20 ist nicht auf einen bestimmten Wert beschränkt. Gemäß einigen Aspekten beträgt der Winkel 20 annähernd neunzig Grad. Im Folgenden wird beschrieben, dass das Segment 18 mit einem Außenumfang eines Statorgehäuses verbunden ist. Gemäß einigen Aspekten beinhaltet das Ende 14 auch mindestens ein Segment 22, das unter einem Winkel 24 in Bezug auf das Segment 18 angeordnet oder gebildet ist. Der Winkel 24 ist nicht auf einen bestimmten Wert beschränkt. Gemäß einigen Aspekten beträgt der Winkel 24 annähernd neunzig Grad. Es sollte klar sein, dass die Schaufel 10 nicht auf die den Figuren 1 bis 6 gezeigte Gestaltung, Form, Ausrichtung, Größe oder das Verhältnis von Körper und Segmenten beschränkt ist und dass andere Gestaltungen, Formen, Ausrichtungen, Größen und Verhältnisse in Geist und Geltungsbereich der beanspruchten Erfindung enthalten sind.

Gemäß einigen Aspekten ist die Schaufel 10 und insbesondere der Körper 12 bogenförmig oder gekrümmt. Gemäß einigen Aspekten ist der Körper 12 bogenförmig in Bezug auf die Achse 26 zwischen den Enden 14 und 16. Diese Krümmung ist besonders aus den Figuren 5 und 6 ersichtlich. Die Schaufel 10 ist nicht auf ein bestimmtes Ausmaß der Krümmung beschränkt. Die Krümmung kann gleichmäßig sein oder über den Körper hinweg variieren. Es sollte klar sein, dass die Schaufel 10 auch in Bezug auf eine zur Achse 26 senkrechte Ausrichtung bogenförmig sein kann.

Gemäß einigen Aspekten beinhaltet das Ende 16 Segmente 28 und 30. Im Folgenden wird beschrieben, dass diese Segmente zum Verbinden der Schaufel mit einem Statorring und zum Stabilisieren des Rings dienen. Gemäß einigen Aspekten sind die Segmente 28 unter einem Winkel 32 in Bezug auf den Körper angeordnet oder geformt. Gemäß einigen Aspekten beträgt der Winkel 32 annähernd neunzig Grad. Gemäß einigen Aspekten beinhaltet das Segment 28 eine unter einem Winkel 36 in Bezug auf das Segment 28 angeordnete oder geformte Zunge 34. Gemäß einigen Aspekten beträgt der Winkel 36 annähernd neunzig Grad. Im Folgenden wird beschrieben, dass die Zunge 34 zum Verbinden der Schaufel mit dem Statorring dient. Gemäß einigen Aspekten ist das Segment 30 unter einem Winkel 38 in Bezug auf den Körper angeordnet oder geformt. Gemäß einigen Aspekten beträgt der Winkel 38 annähernd neunzig Grad.

Gemäß einigen Aspekten verjüngt sich die Schaufel 18 in Bezug auf die Enden 14 und 16. Zum Beispiel verjüngt sich der Körper 12 in den Figuren vom Ende 16 zum Ende 14. Das heißt, die Breite 40 ist größer als die Breite 42. Es sollte klar sein, dass die Schaufel 10 auch so geformt sein kann, dass sie sich vom Ende 14 zum Ende 16 verjüngt. Ferner sollte klar sein, dass die Schaufel mit beliebigen Kombinationen von Verjüngungen oder Formen geformt sein kann. Bei einem (nicht gezeigten) Beispiel können die Breiten 40 und 42 kleiner als die Breite 44 oder die Breite könnte kleiner als die Breiten 40 und 42 sein.
Im Allgemeinen ist die Schaufel 10 nicht auf eine bestimmte Kombination, Form oder ein Verhältnis von Verjüngungen beschränkt.

Gemäß einigen Aspekten, die in den Figuren dargestellt sind, wird die Schaufel 10 durch Stanzen gebildet. Zum Beispiel wird die Schaufel durch Stanzen einer Blechtafel gebildet. Es sollte klar sein, dass die Schaufel 10 durch ein beliebiges in der Technik bekanntes Stanzverfahren gebildet werden kann und dass eine gestanzte Schaufel 10 aus einem beliebigen in der Technik bekannten Material gebildet werden kann, zum Beispiel, aber nicht ausschließlich, aus Stahl oder Aluminium. Gemäß einigen (nicht gezeigten) Aspekten wird die Schaufel 10 durch Metallguss, Kunststoffformguss oder durch Formung von Metallpulver gebildet.

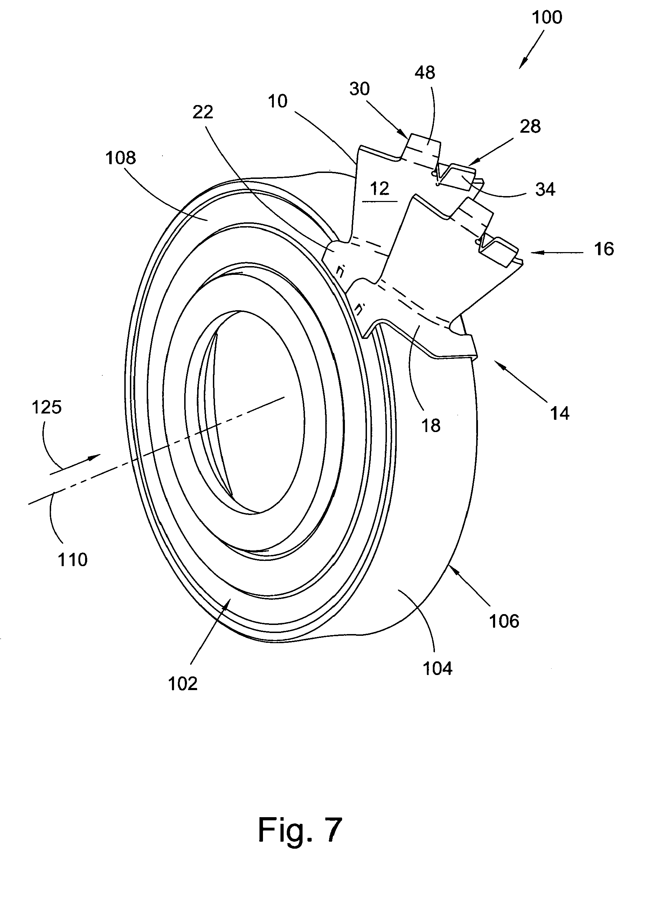

Fig. 7 ist eine perspektivische Ansicht einer teilweise dargestellten Statorschaufelbaugruppe 100 gemäß der vorliegenden Erfindung. Die folgende Beschreibung ist in Verbindung mit den Figuren 1 bis 7 zu sehen. Die Baugruppe 100 wird durch eine Vielzahl von Schaufeln 10 gebildet. Zur einfacheren Darstellung sind nur zwei Schaufeln 10 gezeigt. Es sollte jedoch klar sein, dass die Baugruppe 100 nicht auf eine bestimmte Anzahl von Schaufeln beschränkt ist. Die Erörterung der Schaufel 10 in der Beschreibung der Figuren 1 bis 6 trifft auch auf die Schaufeln 10 in Fig. 7 zu. Somit beinhaltet jede aus der Vielzahl der Schaufeln einen Körper 12 und Enden 14 und 16. Das Ende 14 ist mit dem Statorgehäuse 102 verbunden und das Ende 16 so gestaltet, dass es mit einem (nicht gezeigten) Laufring des Stators verbunden ist. In Fig. 7 ist jede Schaufel in der Baugruppe eine Einzelkomponente, d.h. ein einzelnes Teil, und die einzelnen Teile bilden zusammen die Baugruppe. Es sollte jedoch klar sein, dass bei einigen (nicht gezeigten) Aspekten zwei oder mehr Schaufeln als Einzelkomponente gebildet sein können. Das heißt, ein einzelnes Teil kann mehr als eine Schaufel enthalten.

Die Segmente 18 sind mit der durch einen Außenumfang 106 des Statorgehäuses 102 definierten Fläche 104 verbunden oder berühren diese. Die Segmente 22 sind mit der radialen Fläche 108 und einer anderen (in Fig. 7 nicht sichtbaren) radialen Fläche auf der anderen Seite des Statorgehäuses 102 verbunden oder berühren diese.

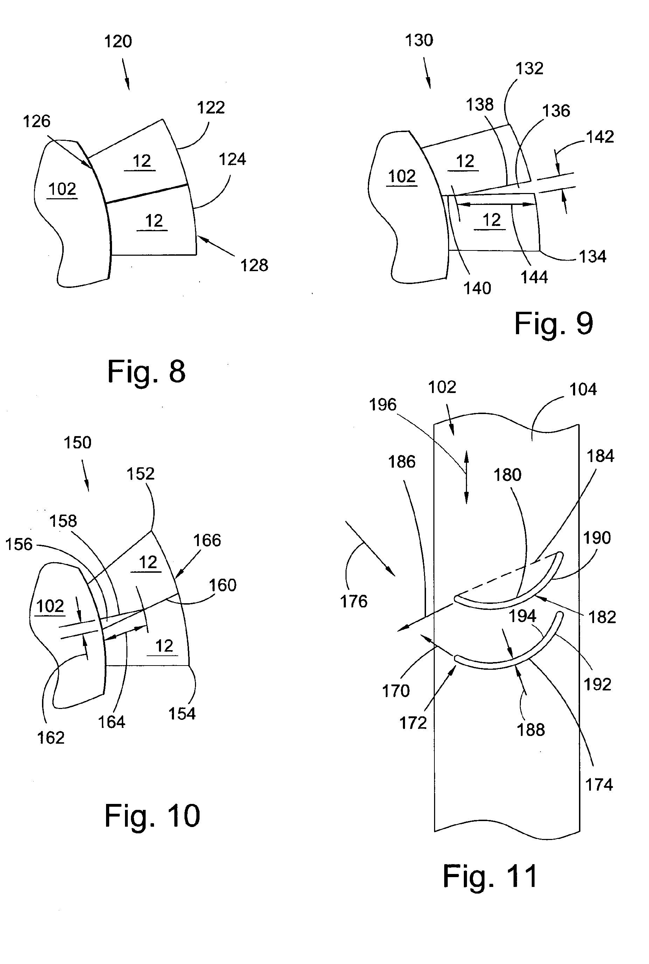

Die Figuren 8 bis 10 sind Vorderansichten benachbarter Statorschaufeln 10 der Statorschaufelbaugruppe 100 gemäß der vorliegenden Erfindung, und veranschaulichen eine entsprechende Überlappung von Schaufeln 10.

Fig. 11 ist eine Draufsicht auf benachbarte Statorschaufeln 10 der Statorschaufelbaugruppe 100 gemäß der vorliegenden Erfindung und veranschaulicht die Anstellwinkel der Schaufeln. Die folgende Beschreibung ist in Verbindung mit den Figuren 1 bis 11 zu sehen. Die Form der Schaufeln in den Figuren 8 bis 11 ist vereinfacht dargestellt, um die Erörterung der Überlappung zu erleichtern. Zum Beispiel sind die oben beschriebenen Details bezüglich der Enden und Segmente weggelassen worden. Es sollte jedoch klar sein, dass die Erörterung in der Beschreibung der Figuren 8 bis 11 auch auf die in Fig. 7 gezeigten Schaufeln zutrifft. Die einzelnen Schaufeln in den Figuren 8 bis 11 sind jeweils durch Bezugsnummern gekennzeichnet, um die entsprechenden Beschreibungen zu verdeutlichen. Es sollte jedoch klar sein, dass die Erörterung in der Beschreibung der Figuren 1 bis 6 auch auf die in den Figuren 8 bis 11 gezeigten Schaufeln zutrifft. Der Stator 102 beinhaltet eine Längsachse 110. In der folgenden Beschreibung beziehen sich die Begriffe "axial", "radial" und "Umfangs-" auf die Achse 110.

Da in bestimmten Schaufelbaugruppen gemäß der vorliegenden Erfindung jede Schaufel 10 eine Einzelkomponente ist, können solche Baugruppen so gestaltet werden, wie dies bei monolithischen Schaufelbaugruppen nicht möglich ist, zum Beispiel bei gegossenen Schaufelbaugruppen, bei denen zwei oder mehr Schaufeln oder gar die gesamte Baugruppe in einem Stück gefertigt ist. Durch die vorliegende Erfindung wird es möglich, dass sich die entsprechenden Körper benachbarter Schaufeln in der Baugruppe 100 in Bezug auf die Achse 110 zumindest teilweise überlappen. Mit anderen Worten, eine durch die Achse 110 führende (nicht gezeigte) radiale Ebene schneidet zumindest teilweise die entsprechenden Körper der benachbarten Schaufeln. Eine solche überlappende Gestaltung ist bei den oben beschriebenen gegossenen Schaufelbaugruppen, bei denen eine axial trennbare Gussform verwendet wird, nicht möglich. Fig. 8 zeigt ein Paar 120 benachbarter Schaufeln 122 und 124. Beim Blick auf das Paar 120 in axialer Richtung, z.B. in Richtung 125 parallel zur Achse 110 ist zwischen den Schaufeln kein Zwischenraum zu erkennen. Das heißt, bei den Schaufeln des Paars 120 überlappen sich die entsprechenden Körper 12 vollständig in Bezug auf eine durch die Achse 110 verlaufende radiale Ebene. Das heißt, die Ebene verläuft durch die Enden 14 und 16 jeder der Schaufeln 122 und 124. Mit anderen Worten, die Schaufeln 122 und 124 überlappen sich Umfangsrichtung vom Innenumfang 126 bis zum Außenumfang 128. Es sollte klar sein, dass die Baugruppe 100 nicht auf ein bestimmtes Ausmaß der Überlappung benachbarter Schaufeln beschränkt ist.

Die Figuren 9 und 10 zeigen eine teilweise Überlappung entsprechender Schaufelkörper in Bezug auf eine durch die Achse verlaufende radiale Ebene. In Fig. 9 überlappt sich ein Paar 130 benachbarter Schaufeln 132 und 134 in Umfangsrichtung und bildet zwischen sich einen Zwischenraum oder eine Öffnung 136. Der Zwischenraum 136 erweitert sich in radialer Richtung zum Statorkern 102 hin. Somit überlappen sich die entsprechenden Körper der Schaufeln 132 und 134 an entsprechenden Enden 14, und die Kanten 138 und 140 entfernen sich in radialer Richtung nach außen zum Statorgehäuse 102 hin voneinander. Das Paar 130 ist nicht auf eine bestimmte Größe oder Form des Zwischenraums 136 beschränkt. Zum Beispiel können sich die Kanten 138 und 140 in Bezug auf eine radiale Ebene an einem beliebigen Punkt überlappen, und die Öffnung 136 ist nicht auf eine bestimmte Breite 142 oder Länge 144 beschränkt. Die in Fig. 9 gezeigte teilweise radiale Überlappung kann unter Verwendung einer axial zu trennenden Gussform gemäß der obigen Beschreibung nicht gebildet werden.

In Fig. 10 überlappen sich die benachbarten Schaufeln 152 und 154 des Paars 150 einander in Umfangsrichtung und bilden zwischen sich einen Zwischenraum 156. Der Zwischenraum 156 erweitert sich vom Statorgehäuse 102 weg in radialer Richtung nach innen. Somit überlappen sich die entsprechenden Körper der Schaufeln 152 und 154 an den entsprechenden Enden 16, und die Kanten 158 und 160 entfernen sich in radialer Richtung vom Statorgehäuse 102 weg nach innen voneinander. Das Paar 150 ist nicht auf eine bestimmte Größe oder Form des Zwischenraums 156 beschränkt. Zum Beispiel können sich die Kanten 158 und 160 in Bezug auf eine radiale Ebene an einem beliebigen Punkt überlappen, und die Öffnung 156 ist nicht auf eine bestimmte Breite 162 oder Länge 164 beschränkt. Die in Fig. 10 gezeigte teilweise Überlappung in Umfangsrichtung kann unter Verwendung einer axial zu trennenden Gussform gemäß der obigen Beschreibung nicht gebildet werden. Ferner kann eine zum Außenumfang 166 hin geschlossene radiale Öffnung unter Verwendung einer radial zu trennenden Gussform nicht gebildet werden. Selbst wenn die Schaufeln 152 und 154 über den Umfang hinweg voneinander getrennt sind, sodass sich die entsprechenden Körper in Umfangsrichtung nicht überlappen (nicht dargestellt), können die Schaufeln aufgrund der mit dieser Gestaltung verbundenen Hinterschneidungen (Breite 42 ist kleiner als Breite 40) nicht unter Verwendung einer radial zu trennenden Gussform gebildet werden.

Der Eintrittswinkel für eine Statorschaufel stellt gemäß der obigen Beschreibung für die Ermittlung des Wirkungsgrades des Stators eines Drehmomentwandlers einen wichtigen Faktor dar. Der Eintrittswinkel bezieht sich auf eine Tangente der Schaufelnase, d.h. auf den der (nicht gezeigten) Turbine zugewandten Teil der Schaufel, z.B. auf die Tangente 170 von der Nase 172 der Schaufel 174. Die Flüssigkeit strömt in einer bestimmten Richtung bzw. unter einem bestimmten Winkel, z.B. in der Richtung 176, von der Turbine zum Stator. Je stärker diese Tangente 170 und die Richtung 176 parallel zueinander sind, desto wirksamer überträgt der Stator im Allgemeinen die Flüssigkeit von der Turbine zur (nicht gezeigten) Pumpe. Mit anderen Worten, die Fläche 180 wird wünschenswerterweise so gestaltet, dass sich die Fläche der Flüssigkeit nicht rechtwinklig in einen Weg stellt und gegen die Flüssigkeit "ankämpft", sondern auf den von der Turbine kommenden Flüssigkeitsstrom ausgerichtet ist und diesen allmählich ablenkt. Da die Schaufeln gemäß der vorliegenden Erfindung mit axial überlappender, bogenförmiger Gestalt gebildet werden können, können die Schaufelnasen so geformt werden, dass der Eintrittswinkel optimal wird. Aufgrund der Krümmung der Nase 172, steht zum Beispiel die Tangente 170 fast parallel zur Richtung 176, sodass die Wechselwirkung zwischen der von der Turbine kommenden Flüssigkeit mit den Statorschaufeln optimal gestaltet werden kann.

Für eine gegossene Schaufel ist der Krümmungsgrad durch die oben erwähnten Vorbedingungen für das Trennen der Gussform stark eingeschränkt, sodass auch die für die Nase mögliche Krümmung ebenfalls eingeschränkt ist. Bei der Schaufel 182 beispielsweise ist die Fläche 180 so geformt, dass sie zur Turbine "zeigt" und eine günstige Tangente 170 bildet. Bei einer gegossenen Schaufel würde die zur Turbine "zeigende" Fläche typischerweise wie die Fläche 184 ausgerichtet sein, um die Anforderungen zur Vermeidung von axialen Überlappungen zu erfüllen, die durch eine axial zu trennende Gussform gestellt werden. Somit wäre die Nase wesentlich weniger gekrümmt, und eine Tangente der Nase wäre ähnlich wie die Tangente 186 ausgerichtet. Wie zu sehen ist, steht die Tangente 186 fast senkrecht zur Richtung 176, was den Wirkungsgrad eines unter Verwendung der gegossenen Schaufel hergestellten Stators nachteilig beeinflussen würde.

Fig. 11 veranschaulicht auch, dass die Schaufeln 10 mit gleichmäßiger Dicke gebildet werden können. Das heißt, die Dicke des Körpers einer Schaufel kann für die gesamte Schaufel gleichmäßig erzeugt werden. Durch die Gleichmäßigkeit der Dicke kann die Form der Schaufel vorteilhaft gestaltet werden. Zum Beispiel folgt die Fläche 180 in Fig. 11 dem Verlauf der Fläche 190, sodass sich wie oben beschrieben die gewünschte Krümmung und der gewünschte Eintrittswinkel ergeben. Um hingegen die Überlappung zu vermeiden, müsste sich die Fläche 184 von der Fläche 190 entfernen, was zu dem oben erwähnten ungünstigen Eintrittswinkel führen würde.

Schaufeln gemäß der vorliegenden Erfindung können in parallelen Gestaltungsformen gebildet werden. Zum Beispiel weisen die Schaufeln 174 und 182 gegenüberliegende Seiten 192 und 194 bzw. 190 und 180 auf. In Fig. 11 sind die Schaufeln so gestaltet, dass die Seiten 194 und 190 einander gegenüber liegen (zueinander zeigen) und im Wesentlichen parallel zueinander sind. Das heißt, der Abstand zwischen den Seiten ist in Bezug auf radiale Flächen, z.B. Flächen in Richtung 196, gleich bleibend. Insbesondere kann eine Baugruppe gemäß der vorliegenden Erfindung so gestaltet werden, dass sie Schaufeln beinhaltet, die sowohl bogenförmig als auch parallel sind.

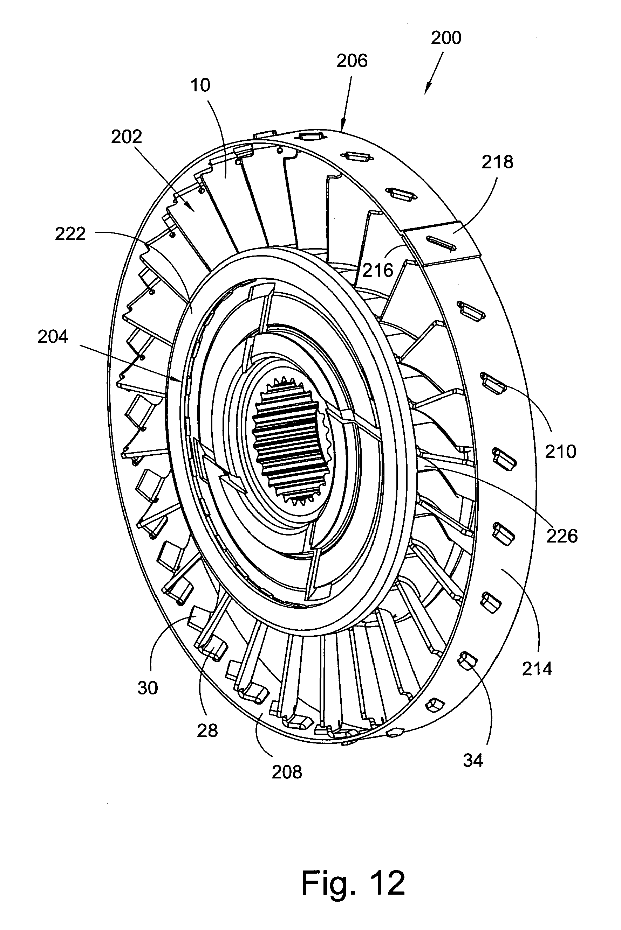

Fig. 12 ist eine perspektivische Vorderansicht eines Stators 200 gemäß der vorliegenden Erfindung für einen Drehmomentwandler.

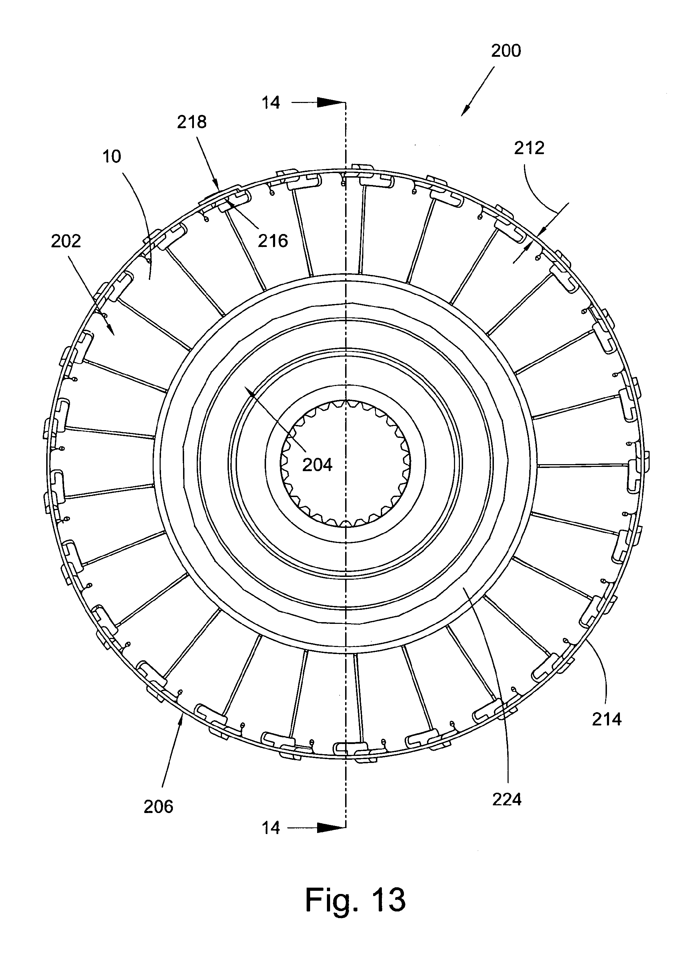

Fig. 13 ist eine Rückansicht des in Fig. 12 gezeigten Stators 200. Die folgende Beschreibung ist in Verbindung mit den Figuren 1 bis 13 zu sehen. Die Beschreibung für Fig. 7 trifft auch auf den Stator 200 zu. Der Stator 200 beinhaltet eine Vielzahl 202 gestanzter Schaufeln 10, ein Statorgehäuse 204 und einen Laufring 206. Es sollte klar sein, dass die Erörterung in den Beschreibungen für die Figuren 8 bis 11 auch auf die Vielzahl 202 (die im Folgenden als Baugruppe 202 bezeichnet wird) zutrifft. Gemäß der obigen Beschreibung ist für jede Schaufel 10 das Ende 14 mit einem Statorgehäuse 204 und das Ende 16 mit einem Laufring 206 verbunden. Jede Schaufel 10 in der Baugruppe 202 ist gemäß der obigen Beschreibung in der Baugruppe von den anderen Schaufeln getrennt. Gemäß einigen (nicht gezeigten) Aspekten sind zwei oder mehr Schaufeln in der Baugruppe gemäß der obigen Beschreibung in ein und demselben Stück bzw. derselben Komponente enthalten. Der Laufring 206 beinhaltet eine innere Umfangsfläche 208, und das Ende 16 berührt die innere Umfangsfläche. Insbesondere wird die Fläche 208 durch die in Fig. 2 gezeigten Flächen 46 und 48 berührt. Gemäß einigen Aspekten bewirken das Segment 30 und die Fläche 48 eine Verstärkung und Versteifung des Rings 206. Gemäß einigen (nicht gezeigten) Aspekten wird das Segment 30 an der Schaufel 10 weggelassen und die Verstärkung und Versteifung des Rings 206 durch Erhöhung der Dicke 212 erreicht. Es sollte klar sein, dass die vorliegende Erfindung nicht auf eine bestimmte Kombination von Flächen 48 und Dicken 212 beschränkt ist.

Gemäß einigen Aspekten weist der Laufring 206 auch mindestens eine Öffnung 210 und eine äußere Umfangsfläche 214 auf. Gemäß einigen Aspekten ragt ein Teil jedes Endes 16, insbesondere die Zunge 34 durch eine entsprechende Öffnung 210 und berührt die Umfangsfläche 214. Insbesondere sind die Zungen 34 so umgebogen, dass die Flächen 50 die Fläche 214 berühren. Die Enden 16 und die Zungen 34 befestigen die Baugruppe am Statorring. Die Zungen 34 bieten ein sehr einfaches und kostengünstiges Mittel zur Befestigung der Baugruppe am Ring. Es sollte jedoch klar sein, dass zur Befestigung der Baugruppe 202 am Ring 206 andere (nicht gezeigte) Mittel verwendet werden können. Zum Beispiel können die Enden 16 mit dem Ring verschweißt werden. Gemäß einigen Aspekten ist der Laufring 206 eine gestanzte rechteckige Platte mit Enden 216 und 218. Um den Ring 206 zu bilden, wird die Platte kreisförmig gerollt, und die sich überlappenden Enden 216 und 218 werden miteinander verbunden. Zur Verbindung der Enden kann ein beliebiges in der Technik bekanntes Mittel verwendet werden.

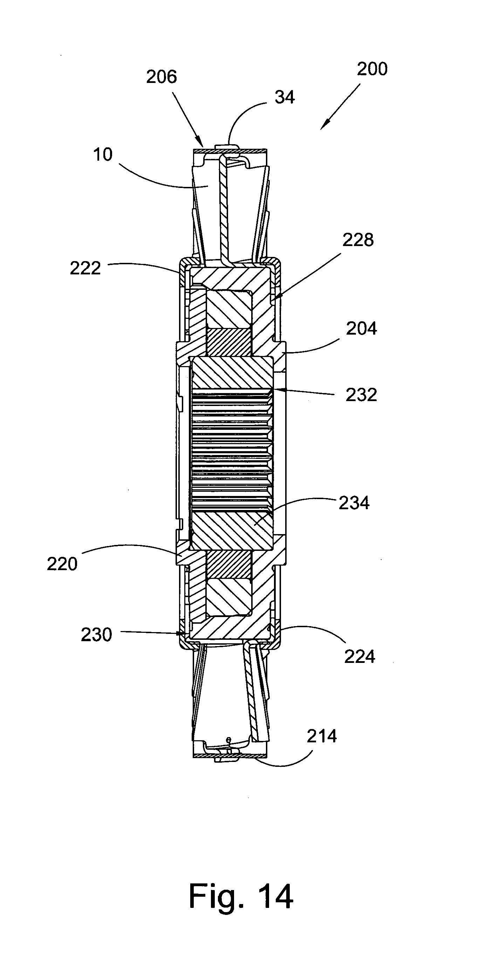

Fig. 14 ist eine Querschnittsansicht des in Fig. 13 gezeigten Stators 200 entlang der Schnittlinie 14-14 in Fig. 13.

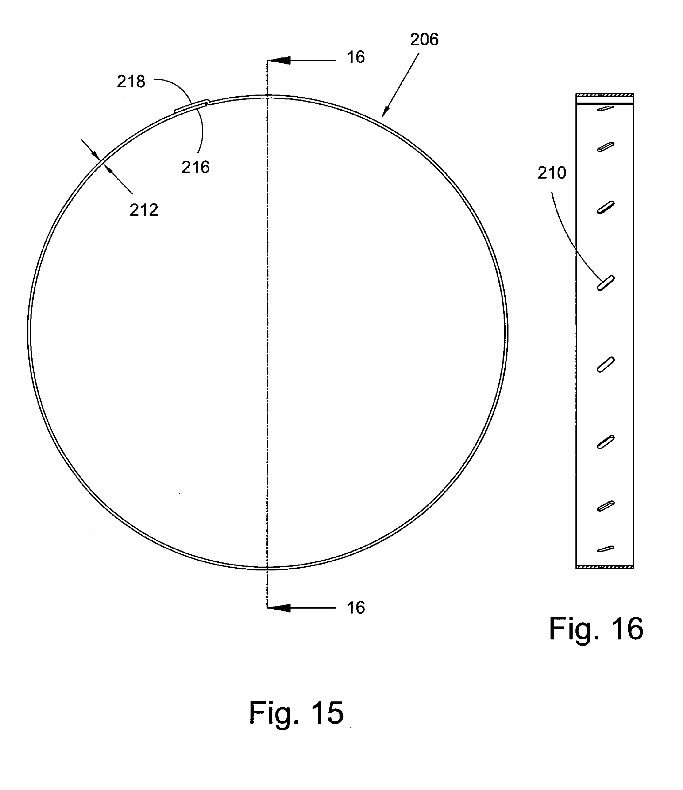

Fig. 15 ist eine Vorderansicht des in Fig. 12 gezeigten Laufrings 206.

Fig. 16 ist eine Querschnittsansicht des in Fig. 15 gezeigten Laufrings entlang der Schnittlinie 16-16 in Fig. 15. Die folgende Beschreibung ist in Verbindung mit den Figuren 1 bis 16 zu sehen. Der Stator 200 beinhaltet eine Seitenplatte 220 sowie Halteringe 222 und 224. Gemäß einigen Aspekten sind die Platte 220, der Ring 222 oder der Ring 224 gestanzt. Es sollte jedoch klar sein, dass die Platte und die Ringe unter Verwendung eines beliebigen in der Technik bekannten Verfahrens gebildet werden können. Das Statorgehäuse 204 beinhaltet eine äußere Umfangsfläche 226 und radiale Flächen 228 und 230. Die Enden 14 der Schaufeln 10 berühren die Flächen 226, 228 und 230. Die Beschreibung von Fig. 7 trifft auch auf die Schaufeln 10 und die Flächen 226, 228 und 230 zu. Die Halteringe 222 und 224 bedecken die Segmente 22 der Schaufeln. Gemäß einigen Aspekten sind die Ringe durch Presspassung zumindest mit einem Teil der Enden 14, insbesondere mit den Segmenten 22, verbunden. Es sollte jedoch klar sein, dass zur Befestigung der Ringe am Stator ein beliebiges in der Technik bekanntes Verfahren verwendet werden kann. Gemäß einigen Aspekten beinhaltet der Stator 200 eine Einwegekupplung 232 mit einem inneren Laufring 234. Gemäß einigen Aspekten haltern die Seitenplatte und die Ringe 222 und 224 die Komponenten für die Kupplung und die Baugruppe 202. Gemäß einigen Aspekten zentrieren die Seitenplatte und der Ring 222 den inneren Laufring 234. Gemäß einigen (nicht gezeigten) Aspekten sind die Seitenplatte und der Ring 222 aus ein und demselben Stück gebildet.

Somit wird deutlich, dass die Aufgaben der vorliegenden Erfindung wirksam gelöst werden, obwohl dem Fachmann Modifikationen und Änderungen der Erfindung geläufig sein sollten, wobei die Modifikationen als in Geist und Geltungsbereich der beanspruchten Erfindung liegend anzusehen sind. Ferner sollte klar sein, dass die vorhergehende Beschreibung zur Veranschaulichung der vorliegenden Erfindung dient und nicht als Einschränkung anzusehen ist. Deshalb sind andere Ausführungsarten der vorliegenden Erfindung möglich, ohne von Geist und Geltungsbereich der vorliegenden Erfindung abzuweichen.

## Patentansprüche

1. Schaufel für den Stator eines Drehmomentwandlers, die Folgendes umfasst:
einen Körper;
ein erstes Ende; und
ein zweites Ende, wobei das erste Ende so angeordnet ist, dass es mit einem Gehäuse für den Stator verbunden ist, und das zweite Ende so angeordnet ist, dass es mit einem Laufring des Stators verbunden ist.

2. Schaufel nach Anspruch 1, bei welcher der Körper bogenförmig ist.

3. Schaufel nach Anspruch 2, bei welcher der Körper ferner eine erste Dicke umfasst und die erste Dicke des Körpers im Wesentlichen gleichmäßig ist.

4. Schaufel nach Anspruch 2, die ferner Folgendes umfasst: eine Achse zwischen dem ersten und dem zweiten Ende; wobei der Körper in Bezug auf die Achse bogenförmig ist.

5. Schaufel nach Anspruch 1, bei welcher der Körper ferner eine zweite Dicke umfasst und die zweite Dicke für den Körper im Wesentlichen gleichmäßig ist.

6. Schaufel nach Anspruch 1, bei welcher sich der Körper in Bezug auf das erste und das zweite Ende verjüngt.

7. Schaufel nach Anspruch 6, bei welcher sich der Körper vom zweiten Ende zum ersten Ende verjüngt.

8. Schaufel nach Anspruch 1, bei welcher das erste und das zweite Ende integraler Bestandteil des Körpers sind.

9. Schaufel nach Anspruch 1, bei welcher das erste Ende ferner ein erstes Segment und mindestens ein zweites Segment umfasst, wobei das erste Segment unter einem ersten Winkel in Bezug auf den Körper angeordnet ist und das mindestens eine zweite Segment unter einem zweiten Winkel in Bezug auf das erste Segment angeordnet ist.

10. Schaufel nach Anspruch 9, bei welcher der erste und der zweite Winkel annähernd neunzig Grad betragen.

11. Schaufel nach Anspruch 1, bei welcher das zweite Ende mindestens ein drittes Segment umfasst, das unter einem dritten Winkel in Bezug auf den Körper angeordnet ist.

12. Schaufel nach Anspruch 11, bei welcher das mindestens eine dritte Segment ferner eine Zunge umfasst, die unter einem vierten Winkel in Bezug auf das mindestens eine dritte Segment angeordnet ist.

13. Schaufel nach Anspruch 12, bei welcher der dritte und der vierte Winkel annähernd neunzig Grad betragen.

14. Schaufel nach Anspruch 1, wobei die Schaufel gestanzt ist.

15. Statorschaufelbaugruppe für den Stator eines Drehmomentwandlers, wobei die Baugruppe Folgendes umfasst:
Eine Vielzahl von Schaufeln, wobei jede Schaufel der Vielzahl von Schaufeln ein einzelnes Stück ist, jede Schaufel einen Körper, ein erste Ende und ein zweites Ende umfasst, das erste Ende so gestaltet ist, dass es mit einem Gehäuse für den Stator verbunden ist, und das zweite Ende so gestaltet ist, dass es mit einem Laufring des Stators verbunden ist.

16. Baugruppe nach Anspruch 15, bei welcher die Schaufel gestanzt ist.

17. Baugruppe nach Anspruch 15, bei welcher der Stator eine Längsachse umfasst und die Vielzahl von Schaufeln eine erste und eine zweite Schaufel umfasst, wobei die erste und zweite Schaufel einander benachbart sind und sich die entsprechenden Körper der ersten und zweiten Schaufel in Bezug auf eine durch die Achse führende radiale Ebene zumindest teilweise überlappen.

18. Baugruppe nach Anspruch 17, wobei die Baugruppe einen Innenumfang und einen Außenumfang umfasst und sich die Körper für die erste und zweite Schaufel vom Innenumfang zum Außenumfang überlappen.

19. Baugruppe nach Anspruch 17, die ferner Folgendes umfasst: eine erste axiale Öffnung zwischen der ersten und zweiten Schaufel, wobei sich die erste Öffnung in radialer Richtung nach außen erweitert.

20. Baugruppe nach Anspruch 19, bei welcher die erste Öffnung so gestaltet ist, dass sie mit dem Laufring in Verbindung steht.

21. Baugruppe nach Anspruch 17, die ferner Folgendes umfasst: eine zweite axiale Öffnung zwischen der ersten und zweiten Schaufel, wobei sich die zweite Öffnung in radialer Richtung nach innen erweitert.

22. Baugruppe nach Anspruch 21, bei welcher die zweite Öffnung so gestaltet ist, dass sie mit dem Statorgehäuse in Verbindung steht.

23. Baugruppe nach Anspruch 15, bei welcher die Vielzahl von Schaufeln eine dritte und vierte benachbarte Schaufel mit entsprechenden gegenüberliegenden Seiten umfasst, wobei entsprechende Körper der dritten und vierten Schaufel bogenförmig sind und die gegenüberliegenden Seiten im Wesentlichen parallel sind.

24. Stator für einen Drehmomentwandler, wobei der Stator Folgendes umfasst:
eine Vielzahl von Schaufeln, wobei jede Schaufel der Vielzahl von Schaufeln ein einzelnes Stück ist;
ein Gehäuse für einen Stator; und
einen Laufring, bei dem jede Schaufel ferner ein erstes Ende, das mit dem Gehäuse verbunden ist, und ein zweites Ende umfasst, das mit dem Laufring verbunden ist.

25. Stator nach Anspruch 24, bei dem jede Schaufel gestanzt ist.

26. Stator nach Anspruch 24, bei dem der Laufring eine innere Umfangsfläche umfasst und das zweite Ende ferner eine äußere Umfangsfläche der Schaufel umfasst, welche die innere Umfangsfläche berührt.

27. Stator nach Anspruch 26, bei dem die äußere Umfangsfläche der Schaufel so gestaltet ist, dass sie den Statorring verstärkt.

28. Stator nach Anspruch 24, bei dem der Laufring mindestens eine Öffnung und eine äußere Umfangsfläche umfasst, mindestens ein zweites Ende eine Zunge umfasst, die Zunge durch eine entsprechende mindestens eine radiale Öffnung ragt und die Zunge in der Nähe der äußeren Umfangsfläche abgewinkelt ist.

29. Stator nach Anspruch 24, bei dem der Laufring aus einer gestanzten rechteckigen Platte mit einem ersten und einem zweiten Ende besteht, die sich überlappen und miteinander verbunden sind.

30. Stator nach Anspruch 24, bei dem das Statorgehäuse eine äußere Umfangsfläche und eine erste und eine radiale Flächen umfasst und das erste Ende die äußere Umfangsfläche und die erste und die zweite radiale Fläche berührt.

31. Stator nach Anspruch 30, der Folgendes umfasst: einen ersten und zweiten Haltering; und wobei der erste und zweite Ring durch Presspassung zumindest auf einen Teil des ersten Endes aufgezogen sind und der erste und zweite Ring durch Presspassung auf die erste bzw. zweite radiale Fläche aufgezogen sind.

32. Stator nach Anspruch 31, bei dem der erste und zweite Haltering gestanzt sind.

33. Stator nach Anspruch 31, bei dem das Statorgehäuse eine Einwegekupplung und einen Lagerring für die Kupplung umfasst und der erste und zweite Ring die Vielzahl von Schaufeln und die Kupplung haltert und bei dem der Lagerring durch eine der ersten und zweiten Platte zentriert wird.

34. Verfahren zur Bildung einer Schaufel für den Stator eines Drehmomentwandlers, wobei das Verfahren Folgendes umfasst:
Stanzen einer Blechtafel zur Bildung eines Körpers für die Schaufel;
Biegen eines ersten Endes des Körpers zur Bildung eines Verbindungssegment für das Statorgehäuse; und
Biegen eines zweiten Endes des Körpers zur Bildung eines Verbindungssegments für den Laufring.

35. Verfahren nach Anspruch 34, das ferner Folgendes umfasst: Krümmen des Körpers.

36. Verfahren nach Anspruch 34, das ferner Folgendes umfasst: Verjüngen des Körpers.

37. Verfahren zur Bildung eines Statorschaufelbaugruppe für den Stator eines Drehmomentwandlers, wobei das Verfahren Folgendes umfasst:
Bilden einer Vielzahl einzelner Schaufeln, wobei jede Schaufel ein Körper und ein erstes und ein zweites Ende aufweist;
Anbringen eines ersten Endes jeder der Schaufeln an einem Gehäuse des Stators; und
Anbringen eines zweiten Endes jeder der Schaufeln an einem Laufring des Stators.

38. Verfahren nach Anspruch 37, das ferner Folgendes umfasst: Stanzen der Vielzahl von Schaufeln.

39. Verfahren nach Anspruch 37, wobei der Stator eine Längsachse umfasst und die Vielzahl von Schaufeln eine erste und eine zweite Schaufel umfasst; und das Verfahren ferner Folgendes umfasst:
Anordnen der ersten und zweiten Schaufel nebeneinander; und
zumindest teilweises Überlappen der Körper der ersten und zweiten Schaufel in Bezug auf eine durch die Achse führende radiale Ebene.

40. Verfahren nach Anspruch 39, das ferner Folgendes umfasst: Bilden einer axialen Öffnung zwischen der ersten und zweiten Schaufel.

41. Verfahren nach Anspruch 40, bei welchem das Bilden einer axialen Öffnung ferner das Bilden der Öffnung derart umfasst, dass sich die Öffnung in radialer Richtung nach außen oder nach innen erweitert.
